# EUROPÄISCHE PATENTSCHRIFT

(11) **EP 0 970 129 B1**
(45) Veröffentlichungstag und Bekanntmachung des Hinweises auf die Patenterteilung: **31.10.2001**
(21) Anmeldenummer: 98908057.7
(22) Anmeldetag: 04.02.1998
(51) Int. Cl.: C08B 3/02, C08B 3/06

(54) **VERFAHREN ZUR HERSTELLUNG VON CELLULOSEACETAT**
METHOD FOR PRODUCING CELLULOSE ACETATE
PROCEDE DE PRODUCTION D'ACETATE DE CELLULOSE

(30) Priorität: 19.03.1997 DE 19711502
(43) Veröffentlichungstag der Anmeldung: 12.01.2000
(73) Patentinhaber: Rhodia Acetow GmbH, 79108 Freiburg (DE)
(72) Erfinder: KARSTENS, Ties, D-79268 Bötzingen (DE); HERMANUTZ, Frank, D-71229 Leonberg (DE)
(74) Vertreter: Hagemann, Heinrich, Dr.rer.nat., Dipl.-Chem.
(86) Internationale Anmeldenummer: EP9800607
(87) Internationale Veröffentlichungsnummer: WO9841543

(56) Entgegenhaltungen:
- CHEMICAL ABSTRACTS, vol. 89, no. 16, 16.Oktober 1978 Columbus, Ohio, US; abstract no. 131396, "Cellulose acetate" XP002068566 & SAGATOVA, T.A. ET AL.: OTKRYTIYA, IZOBRET., PROM. OBRAZTSY, TOVARNYE ZNAKI, Bd. 55, Nr. 23, 1978, Seite 74
- A.K. KULSHRESHTHA ET AL.: "A study on the further acetylation of SPA cotton" JOURNAL OF APPLIED POLYMER SCIENCE, Bd. 24, 1979, Seiten 1139-1141, XP002068565

## Beschreibung

Die Erfindung betrifft ein Verfahren zur Herstellung von Celluloseacetat mit einem DS zwischen 1,5 und 2,9.

Celluloseacetat mit einem Substitutionsgrad (DS) zwischen 1,5 und 2,9 ist ein wichtiges Erzeugnis für verschiedene industrielle Anwendungen. Als Substitutionsgrad DS wird die Zahl an Hydroxylgruppen bezeichnet, die pro Anhydroglucoseeinheit der Cellulose durchschnittlich mit Acetylgruppen verestert sind. Bei den bekannten Verfahren zur Herstellung von Celluloseactat mit einem DS zwischen 1,5 und 2,9 wird stets in einem ersten Verfahrensschritt Cellulose zum Triacetat umgesetzt und das Cellulosetriacetat anschließend auf den gewünschten Substitutionsgrad hydrolysiert. Wenn man die Acetylierung mit einem Unterschuß an Acetylierungsmittel durchführt oder die Acetylierung vorzeitig unterbricht, wird kein homogenes teilweise acetyliertes Produkt erhalten, sondern im wesentlichen ein Gemisch aus Cellulosetriacetat und nicht umgesetzter Cellulose. Die Ursache hierfür liegt in der Struktur der Cellulose, die einerseits amorphe und andererseits kristalline Anteile enthält. Während die amorphen Anteile für das Acetylierungsmittel gut zugänglich sind, sind die kristallinen Anteile schwer zugänglich, was zu einem inhomogenen Reaktionsverlauf führt. Ein Indikator für eine homogene Substituentenverteilung in einem teilweise acetyliertem Celluloseacetat ist seine Löslichkeit in Aceton. Inhomogene Celluloseacetate sind bei gleichem mittleren Gehalt an Acetylgruppen in Aceton unlöslich.

Bei den bekannten technischen Verfahren wird außerdem ein mehr oder weniger großer Überschuß an Acetylierungsmittel, zumeist Essigsäureanhydrid, verwendet, um den Reaktionsverlauf zu begünstigen. Sowohl die Notwendigkeit, die triacetylierte Stufe zu durchlaufen, als auch die in der Praxis erforderliche Verwendung eines Essigsäureanhydridüberschusses gegenüber dem stöchiometrisch erforderlichen Bedarf bedingen einen Mehrverbrauch an Acetylierungsmittel, der beim 2,5-Celluloseacetat bis zu 31% betragen kann. Da für viele industrielle Anwendungen ein 2,5-Celluloseacetat durch ein Celluloseacetat mit einem DS≈2 ersetzt werden kann, würde ein Verfahren, das nicht den Umweg über das Cellulosetriacetat erfordert, zu noch weiteren Einsparungen an Acetylierungsmittel führen.

Handelsübliche Zellstoffe enthalten neben Cellulose stets einen gewissen Anteil an anderen Holzinhaltsstoffen, wie Lignin und insbesondere Hemicellulosen. Die Hemicellulosen bzw. deren acetylierte Formen beeinträchtigen sowohl die Verarbeitung, insbesondere die Löslichkeit, Filtrierbarkeit und Verspinnbarkeit, als auch die Produkteigenschaften der industriell erzeugten Celluloseacetate. Es sind zwar Verfahren bekannt, mit deren Hilfe der Einfluß der Hemicellulosen weitgehend zurückgedrängt werden kann, jedoch sind diese mit einem weiteren Essigsäureanhydridverbrauch verbunden. Hemicellulosen werden dabei zu Mono- und Oligosacchariden abgebaut und bei der Wäsche des Acetats ausgeschleust. Außerdem sind diese Verfahren (High Temperatur Hydrolysis) relativ energieaufwendig und langwierig; sie erfordern auch hohe Investitionskosten. Es ist daher vorteilhaft, die Abtrennung der Hemicellulosen und anderer Holzinhaltsstoffe, wie Lignin und Fette, durch einen kein Acetylierungsmittel verbrauchenden Schritt vorzunehmen.

Die für die Acetylierung geeigneten im Handel befindlichen Zellstoffe gehören zu den Hochqualitätszellstoffen. Sie enthalten nur relativ wenig Hemicellulose (2 bis 3 Gew.-%). Es ist ein Verfahren wünschenswert, bei dem auch weniger hochverdedelte Zellstoffe, d.h. Zellstoffe mit einem höheren Hemicellulosegehalt, verwendet werden können. Dies würde eine erhebliche Kostenersparnis bedeuten, denn die Zellstoffpreise sind relativ hoch und Celluloseacetat besteht zu etwa 60% aus Cellulose.

Der Erfindung liegt daher die Aufgabe zugrunde, ein Verfahren zur Herstellung von Celluloseacetat mit einem DS zwischen 1,5 und 2,9 bereitzustellen, das den Einsatz geringerer Mengen an Acetylierungsmittel als die bekannten Verfahren und insbesondere keinen Umweg über das Cellulosetriacetat erfordert. Es soll Celluloseacetate mit weitgehend homogener Substituentenverteilung liefern. Außerdem soll das Verfahren den Einsatz weniger hochveredelter Zellstoffe ermöglichen, indem die die Qualität und Weiterverarbeitung des Celluloseacetats störenden Begleitstoffe, wie Hemicellulosen, Lignin, Fette usw., in Verfahrensstufen entfernt werden, die kein Acetylierungsmittel verbrauchen.

Erfindungsgemäß wird diese Aufgabe dadurch gelöst, daß die Cellulose in einem ersten Schritt mit überschüssiger Base imprägniert wird, die Base bis auf ein molares Verhältnis von Base:Anhydroglucoseeinheiten (AHG) von weniger als 2,5 wieder entfernt wird und die Cellulose unter Basenkatalyse mit einem ersten Acetylierungsmittel zu Celluloseacetat mit einem DS von weniger als 1 und in einem zweiten Schritt unter Säurekatalyse mit einem zweiten Acetylierungsmittel zu Celluloseacetat mit einem DS von 1,5 bis 2,9 umgesetzt wird.

Basen, die den ersten Schritt des erfindungsgemäßen Verfahrens katalysieren, sind entweder flüssig oder liegen als Lösung, vorzugsweise wäßrige Lösung, vor. Die Basen bzw. ihre Lösungen sind zur Quellung der Cellulose fähig, d.h., sie können in die kristallinen Bereiche der Cellulose eindringen und die Cellulose auf diese Weise aktivieren. Durch die Acetylierung auf einen DS von weniger als 1 wird der Aktivierungszustand konserviert. Es wird angenommen, daß die in niedriger Substituentendichte vorhandenen Acetylgruppen als "Spacer" wirken, die eine Rekristallisation der Celluloseketten verhindern, wenn die Base durch die Reaktion verbraucht oder auf sonstige Weise entfernt wird.

Als Base zur Katalyse des ersten Schritts des erfindungsgemäßen Verfahrens ist vorzugsweise Natronlauge, insbesondere wäßrige Natronlauge mit vorzugsweise einer Konzentration von mindestens 20%, geeignet.

In einer bevorzugten Ausführungsform wird die Cellulose im ersten Schritt mit einem Überschuß an Base imprägniert und die Base bis auf ein molares Verhältnis von Base:AHG (Anhydroglucoseinheiten) von weniger als 1 entfernt und anschließend das erhaltene Produkt mit dem ersten Acetylierungsmittel zu einem Celluloseacetat mit einem DS von weniger als 1 umgesetzt.

"Überschuß an Base" bedeutet, daß die Base oder ihre Lösung zumindest die Oberfläche der Cellulose vollständig benetzen muß. Dabei wird üblicherweise ein molares Verhältnis von Base:AHG von über 3, insbesondere über 6, erreicht. Die Anwendung eines Basenüberschusses erleichtert die homogene Durchdringung der Cellulose mit Base. Die Base wird anschließend größtenteils wieder entfernt, um die Bildung von Nebenprodukten aus der Reaktion der Base mit dem ersten Acetylierungsmittel zu minimieren. Vorzugsweise wird die Base bis auf die zur Bildung des Celluloseacetats mit DS < 1 stöchiometrisch notwendige Basenmenge wieder entfernt. Hierbei werden Restmengen an Base von etwa 2 bis 5 Gew.-% Base (lösungsmittelfreie Berechnungsgrundlage), bezogen auf die Cellulose, bevorzugt. Beim Entfernen des Basenüberschusses werden gleichzeitig unerwünschte Begleitstoffe der Cellulose, wie Lignin, Hemicellulosen, Fette usw., entfernt. Es ist beispielsweise bekannt, daß Hemicellulosen in Natronlauge, insbesondere in dem beim erfindungsgemäßen Verfahren bevorzugten Konzentrationsbereich, löslich sind und durch Abpressen vom unlöslichen Cellstoff abgetrennt werden können (vgl.: K. Götze, Chemiefasern nach dem Viskoseverfahren, 3. Aufl., Springer-Verlag, Berlin, Heidelberg, New York, 1967). Es ist deshalb ein großer Vorteil des erfindungsgemäßen Verfahrens, daß Hemicellulosen in der ersten Verfahrensstufe abgetrennt werden und somit bei der Verarbeitung der Produkte nicht störend wirken können. Es ist weiterhin von Vorteil, daß dadurch weniger veredelte und damit kostengünstigere Zellstoffe mit einem höheren Hemicellulosengehalt eingesetzt werden können. Die unerwünschten Begleitstoffe können auf geeignete Weise von der Base abgetrennt werden, worauf diese wiederverwendet werden kann. Die Base läßt sich unter Ausschleusen der Cellulosebegleitstoffe im Kreislauf führen.

Das Entfernen überschüssiger Base kann durch mechanisches Abpressen der imprägnierten Cellulose geschehen. Alternativ oder vorzugsweise zusätzlich zum Abpressen kann die imprägnierte Cellulose mit einem wassermischbaren polaren organischen Lösungsmittel gespült werden. Das Lösungsmittel ist vorzugsweise aus einwertigen, zweiwertigen oder dreiwertigen C₁-C₄-Alkoholen und Aminen ausgewählt. Der einwertige Alkohol ist vorzugsweise Methanol oder Ethanol und der zweiwertige Alkohol Ethylenglycol.

Durch diese Maßnahme gelingt es leicht, den Gehalt an Base in der Cellulose so weit zu vermindern, wie stöchiometrisch für die Umsetzung mit Acetylierungsmittel zu dem Celluloseacetat mit einem DS von weniger als 1 erforderlich. Überraschenderweise bleibt beim Auswaschen mit dem wassermischbaren polaren organischen Lösungmittel der amorphe reaktive Zustand der Alkalicellulose erhalten. Durch Versetzen mit dem ersten Acetylierungsmittel, insbesondere Essigsäureanhydrid, wird bereits bei Raumtemperatur ein teilacetyliertes Celluloseacetat mit einem DS von weniger als 1 erhalten. Wird zum Auswaschen ein Alkohol, vorzugsweise ein einwertiger Alkohol, verwendet, kann dieser vorteilhaft durch Destillation wiedergewonnen werden. Der nach dem Spülschritt in der Alkalicellulose noch vorhandene Rest an Alkohol reagiert nicht mit dem Acetylierungsmittel.

Das im ersten Schritt des erfindungsgemäßen Verfahrens erhaltene Celluloseacetat mit einem DS von weniger als 1 kann nach dem Waschen mit Wasser und dem Trocknen gelagert werden. Alternativ dazu kann man das Waschen auch mit Eisessig vornehmen. Durch das Waschen können Reste an organischem Lösungsmittel, erstem Acetylierungsmittel und insbesondere das Reaktionsprodukt, das aus der Katalysatorbase und dem ersten Acetylierungsmittel gebildet wird, beispielsweise Natriumacetat bei Einsatz von Natronlauge, entfernt werden.

Das im ersten Verfahrensschritt erhaltene Celluloseacetat weist einen Substitutionsgrad von weniger als 1, vorzugsweise weniger als 0,6 und insbesondere von 0,1 bis 0,5 auf. Es ist von faseriger Struktur und laut Röntgenbeugungsspektrum völlig dekristallisiert. Es zeigt eine einheitliche Reaktivität und ist somit ein geeignetes Substrat für den zweiten Verfahrensschritt, bei dem nunmehr das Celluloseacetat mit dem gewünschten DS direkt, d.h. ohne Umweg über das Triacetat, erhalten wird.

Im zweiten Schritt des erfindungsgemäßen Verfahrens wird das im ersten Schritt erhaltene Celluloseacetat mit einem DS von weniger als etwa 1 unter Zugabe der entsprechenden Menge an zweitem Acetylierungsmittel unter Säurekatalyse direkt zum Celluloseacetat mit dem gewünschten Substitutionsgrad im Bereich von 1,5 bis 2,9, insbesondere 1,8 bis 2,75, besonders bevorzugt etwa 2,5, umgesetzt. Vorzugsweise werden als zweites Acetylierungsmittel Essigsäureanhydrid und als Katalysator vorzugsweise Schwefelsäure verwendet.

Das erfindungsgemäße Verfahren weist zahlreiche Vorteile auf. So ist die Technologie der Mercerisierung, d.h. Behandlung von Cellulose mit Base, gut eingeführt, bewährt und kostengünstig im Betrieb. Entsprechende Anlagen werden bei der Viskose- oder Celluloseetherherstellung weltweit in großem Umfang verwendet. Überschüssige Natronlauge kann ohne größeren Aufwand zurückgewonnen werden. Die Einstellung des Polymerisationsgrades (DP) durch den Kontakt mit Natronlauge ist aus der Viskoseindustrie bekannt und bewährt.

Bei der Mercerisierung werden die unerwünschten Begleitstoffe der Cellulose aus dem Holz, wie Hemicellulosen, Lignin, Fette usw., von der Cellulose abgetrennt, was die Verwendung wesentlich weniger veredelter Zellstoffe ermöglicht. Somit kann die Zellstoffreinigung teilweise von den Zellstoffwerken zum Weiterverarbeiter verlagert werden.

Zum Erreichen des gewünschten Substitutionsgrades im Vergleich zum Stand der Techik ist eine wesentlich geringere Menge an Acetylierungsmittel notwendig. Im ersten Schritt wird ein amorphes Celluloseacetat mit geringem DS erzeugt. Dessen weitere Umsetzung zum Celluloseacetat mit dem gewünschten DS erfolgt ohne die bei den bekannten Verfahren der heterogenen Acetylierung aufgrund des kristallinen Anteils an Cellulose auftretenden Probleme, wie inhomogene Substituentenverteilung und geringe Produktgleichmäßigkeit. Die Acetylierung verläuft bei Raumtemperatur bzw. wenig erhöhten Temperaturen. Die erfindungsgemäßen Produkte zeichnen sich durch eine weitgehend homogene Substituentenverteilung aus, die zu einer hervorragenden Löslichkeit der erfindungsgemäßen Produkte in Aceton führt. Neben 2,5-Celluloseacetaten sind daher auch erfindungsgemäß hergestellte Produkte mit höheren Polymerisationsgraden in Aceton löslich.

Die Erfindung soll nun durch die nachfolgenden Beispiele näher veranschaulicht werden:

### Beispiel 1

In einem 1 1-Dreihalskolben werden 100 g Cellulose mit einem DP von 750 in 500 g 22 gew.-%iger Natronlauge bei 22°C suspendiert. Nach 15 min wird die Mischung in einer Laborkammerfilterpresse bei 150 bar abgepreßt. Der Preßkuchen (250 g) wird in 750 g Methanol bei Raumtemperatur suspendiert und die Alkalicellulose abfiltriert. 150 g methanolhaltige Alkalicellulose werden anschließend in einem thermostatisierbaren Reaktionsgefäß bei 20°C in 150 g Essigsäureanhydrid gegeben und umgesetzt. Nach 10 min wird überschüssiges Anhydrid abfiltriert und das dekristallisierte Celluloseacetat mit Wasser gewaschen und getrocknet. Hierbei wurden 103 g Celluloseacetat mit einem DS von 0,25 erhalten.

In einem thermostatisierbaren Reaktionsgefäß werden zur Cellulose-2,5-acetat-Herstellung 100 g des getrockneten 0,25-CA bei 60°C in 1,5 1 Eisessig (99%) suspendiert. Nach 15 min werden 105 g Essigsäureanhydrid zugegeben. Es wird weitere 5 min bei 60°C gerührt. Nach Zugabe von 15 ml einer 1 gew.-%igen Schwefelsäurelösung in Eisessig wird 45 min bei 60°C gerührt, wobei sich das Reaktionsgemisch homogenisiert. Nach Ausfällen des 2,5-CA in Wasser, mehrmaligem Auswaschen des Produkts und Trocknen bei 100°C werden 150 g Cellulose-2,5-acetat erhalten.

Das Produkt ist in 1350 g Aceton vollständig löslich. Die Lösung wird filtriert und kann zu Cellulose-2,5-acetatprodukten verarbeitet werden.

### Beispiele 2 bis 4

Das Cellulose-2,5-acetat wird wie in Beispiel 1 hergestellt, außer daß das 0,25-CA nicht mit Wasser gewaschen und getrocknet, sondern mit Essigsäureanhydrid (Beispiel 2) oder Essigsäure (Beispiel 3) gewaschen oder direkt ohne Waschen (Beispiel 4) zum 2,5-CA umgesetzt wird.

In jedem Fall waren die erhaltenen Produkte in Aceton vollständig löslich.

## Patentansprüche

1. Verfahren zur Herstellung von Celluloseacetat mit einem Substitutionsgrad (DS) zwischen 1,5 und 2,9 durch Umsetzung von Cellulose mit einem Acetylierungsmittel, **dadurch gekennzeichnet, daß** die Cellulose in einem ersten Schritt mit überschüssiger Base imprägniert wird, die Base bis auf ein molares Verhältnis von Base:Anhydroglucoseeinheiten (AHG) von weniger als 2,5 wieder entfernt wird und die Cellulose unter Basenkatalyse mit einem ersten Acetylierungsmittel zu Celluloseacetat mit einem DS von weniger als 1 und in einem zweiten Schritt unter Säurekatalyse mit einem zweiten Acetylierungsmittel zu Celluloseacetat mit einem DS von 1,5 bis 2,9 umgesetzt wird.

2. Verfahren nach Anspruch I, **dadurch gekennzeichnet, daß** im zweiten Schritt ein DS von 1,8 bis 2,75 eingestellt wird.

3. Verfahren nach Anspruch 1 oder 2, **dadurch gekennzeichnet, daß** das erste Acetylierungsmittel Acetanhydrid ist.

4. Verfahren nach einem der Ansprüche 1 bis 3, **dadurch gekennzeichnet, daß** das zweite Acetylierungsmittel Acetanhydrid ist.

5. Verfahren nach einem der vorstehenden Ansprüche, **dadurch gekennzeichnet, daß** im ersten Schritt zur Basenkatalyse Natronlauge verwendet wird.

6. Verfahren nach einem der vorstehenden Ansprüche, **dadurch gekennzeichnet, daß** im zweiten Schritt zur Säurekatalyse Schwefelsäure verwendet wird.

7. Verfahren nach einem der vorstehenden Ansprüche, **dadurch gekennzeichnet, daß** die Base auf ein molares Verhältnis von weniger als 1 wieder entfernt wird.

8. Verfahren nach einem der vorstehenden Ansprüche, **dadurch gekennzeichnet, daß** die überschüssige Base aus der imprägnierten Cellulose mechanisch abgepreßt wird.

9. Verfahren nach einem der vorstehenden Ansprüche, **dadurch gekennzeichnet, daß** die überschüssige Base durch Auswaschen der imprägnierten Cellulose mit einem wassermischbaren polaren organischen Lösungsmittel entfernt wird.

10. Verfahren nach Anspruch 9, **dadurch gekennzeichnet, daß** das wassermischbare polare organische Lösungsmittel aus einwertigen, zweiwertigen oder dreiwertigen C₁-C₄-Alkoholen und Aminen ausgewählt ist.

11. Verfahren nach Anspruch 10, **dadurch gekennzeichnet, daß** der einwertige Alkohol Methanol oder Ethanol und der zweiwertige Alkohol Ethylenglycol ist.

## Claims

1. Method of manufacturing cellulose with a degree of substitution (DS) between 1.5 and 2.9 by converting cellulose with an acetylating agent, **characterised in that** the cellulose is impregnated in a first step with excess base, the base is removed again down to a molar ratio of base : anhydrous glucose units (AHG) of less than 2.5 and the cellulose is converted under base catalysis with a first acetylating agent into cellulose acetate with a DS of less than 1 and is converted in a second step under acid catalysis with a second acetylating agent into cellulose acetate with a DS of 1.5 to 2.9.

2. Method as claimed in claim 1, **characterised in that** in the second step a DS of 1.8 to 2.75 is achieved.

3. Method as claimed in claim 1 or 2, **characterised in that** the first acetylating agent is acetic anhydride.

4. Method as claimed in one of claims I to 3, **characterised in that** the second acetylating agent is acetic anhydride.

5. Method as claimed in one of the preceding claims, **characterised in that** caustic soda is used in the first step for the base catalysis.

6. Method as claimed in one of the preceding claims, **characterised in that** sulphuric acid is used in the second step for the acid catalysist.

7. Method as claimed in one of the preceding claims, **characterised in that** the base is removed again to a molar ratio of less than 1.

8. Method as claimed in one of the preceding claims, **characterised in that** the excess base is mechanically pressed out of the impregnated cellulose.

9. Method as claimed in one of the preceding claims, **characterised in that** the excess base is removed by washing it out of the impregnated cellulose with a water- miscible, polar organic solvent.

10. Method as claimed in claim 9, **characterised in that** the water-miscible, polar organic solvent is selected from primary, secondary or tertiary C₁-C₄ alcohols and amines.

11. Method as claimed in claim 10, **characterised in that** the primary alcohol is methanol or ethanol and the secondary alcohol is ethylene glycol.

## Revendications

1. Procédé de préparation d'acétate de cellulose ayant un degré de substitution (DS) compris entre 1,5 et 2,9 par réaction de cellulose avec un agent d'acétylation, **caractérisé en ce que**, lors d'une première étape, on imprègne la cellulose avec une base en excès, on élimine à nouveau la base jusqu'à l'obtention d'un rapport molaire de la base : unités anhydroglucose (AHG) inférieur à 2,5 et on fait réagir la cellulose, avec catalyse avec une base, avec un premier agent d'acétylation pour obtenir de l'acétate de cellulose ayant un DS inférieur à 1 et, lors d'une seconde étape catalysée avec un acide, on la fait réagir avec un second agent d'acétylation pour obtenir de l'acétate de cellulose ayant un DS de 1,5 à 2,9.

2. Procédé selon la revendication 1, **caractérisé en ce qu'**on établit un DS de 1,8 à 2,75 pendant la seconde étape.

3. Procédé selon la revendication 1 ou 2, **caractérisé en ce que** le premier agent d'acétylation est l'anhydride acétique.

4. Procédé selon l'une des revendications 1 à 3, **caractérisé en ce que** le second agent d'acétylation est l'anhydride acétique.

5. Procédé selon l'une des revendications précédentes, **caractérisé en ce qu'**on utilise une lessive de soude pour la catalyse avec une base dans la première étape.

6. Procédé selon l'une des revendications précédentes, **caractérisé en ce qu'**on utilise de l'acide sulfurique pour la catalyse avec un acide dans la seconde étape.

7. Procédé selon l'une des revendications précédentes, **caractérisé en ce qu'**on élimine à nouveau la base jusqu'à l'obtention d'un rapport molaire inférieur à 1.

8. Procédé selon l'une des revendications précédentes, **caractérisé en ce qu'**on élimine la base en excès à partir de la cellulose imprégnée par pressage mécanique.

9. Procédé selon l'une des revendications précédentes, **caractérisé en ce qu'**on élimine la base en excès par rinçage de la cellulose imprégnée avec un solvant organique polaire miscible avec l'eau.

10. Procédé selon la revendication 9, **caractérisé en ce qu'**on choisit le solvant organique polaire miscible avec l'eau parmi des alcools en C₁-C₄ et des amines mono-, biet trivalents.

11. Procédé selon la revendication 10, **caractérisé en ce que** l'alcool monovalent est le méthanol ou l'éthanol, et le diol est l'éthylèneglycol.
